# EUROPEAN PATENT SPECIFICATION

(11) **EP 0 343 420 B1**
(45) Date of publication and mention of the grant of the patent: **18.11.1993**
(21) Application number: 89108247.1
(22) Date of filing: 08.05.1989
(51) Int. Cl.: H02K 15/02, H01F 41/02, B21D 43/20

(54) **Apparatus for feeding bundles of laminations**
Vorrichtung zur Speisung von Blechpaketen
Appareil d'alimentation de paquets de tôles

(30) Priority: 25.05.1988 IT 1248688
(43) Date of publication of application: 29.11.1989
(73) Proprietor: SASSI S.r.l., I-17019 Varazze (IT)
(72) Inventor: Sassi, Umberto, I-17019 Varazze (IT)
(74) Representative: Porsia, Bruno

(56) References cited:
- FR-A- 2 164 630
- FR-A- 2 449 995
- US-A- 2 466 693
- US-A- 4 524 601
- PATENT ABSTRACTS OF JAPAN, vol. 2, no. 129, 25th October 1978, page 7726 E 78; & JP-A-53 95 204 (HITACHI SEISAKUSHO K.K.) 21-08-1978

## Description

The invention relates to an apparatus for feeding bundles of laminations to a machine that processes or uses bundles of laminations, particularly to a machine for making rotors or stators for electric machines, or transformers, or the like, said machine having a vertical feeding duct into which the vertically oriented bundles of laminations are introduced the one after the other from above, and said apparatus comprising a movable grasping and transferring device which cyclically takes a bundle of laminations from a magazine located at a withdrawal station, and conveys this bundle of laminations coaxially over the opening of the feeding duct of the machine, so as to enable said bundle to be set into the said duct.

An apparatus of this kind is known from the document FR-A-2 449 995. In this known apparatus, the movable grasping and transferring device comprises a vertical rod onto which the laminations of a bundle are slipped the one upon the other, which bundle bears on a support provided at the lower end of the rod. The release of the bundle of laminations over the machine is accomplished by removing the support at the lower end of the rod with a manual operation on the grasping and transferring device.

The document FR-A-2 164 630 discloses an apparatus for making bundles of laminations, in which the laminations are withdrawn, transferred, and deposited one at a time by a movable grasping and transferring device that consists of one or more electromagnets for engagement with a flat side of each single lamination. The withdrawal of each single lamination from a withdrawal station, and the release of each single lamination of a bundle of laminations at a bundle-forming station are accomplished by having the electromagnet or electromagnets energizing current switched on and off.

The invention aims to speed up the feeding of bundles of laminations to a machine of the type as stated at the outset, by eliminating or at least considerably reducing the work or hands, and by replacing the manually operated grasping and transferring device known from the document FR-A-2 448 995, with a simpler, less costly and more reliable automatic device, in which no use is made of electromagnets that require a relative electric installation, as well as electric power-feeding cables between stationary and movable parts of the machine.

This problem is solved by the invention with the provision that the grasping and transferring device comprises a permanent magnet (or a group of two or more permanent magnets) for engagement with one longitudinal side of a bundle of laminations over the whole length thereof, and the withdrawal of a bundle of laminations from the respective magazine in the withdrawal station is performed simply by contact, while for the release of the bundle of laminations over the opening of the feeding duct of the machine, one or more movable abutment members are provided, which are shiftable between an inactive position in which they allow the bundle of laminations to be freely positioned over the opening of the said feeding duct, and an active position in which the said members engage and hold back the bundle of laminations having been positioned over the opening of the feeding duct of the machine, thus causing the separation of this bundle of laminations from the permanent magnet or magnets of the grasping and transferring device, on this device being retracted.

The movement of the grasping and transferring device between the position in which it takes a bundle of laminations from the magazine, and the position in which it places the bundle of laminations over the opening of the feeding duct of the machine, may be provided by any suitable kinematic motion and mechanism which is adapted for orienting the bundle of laminations in the withdrawal station, or is operated by any suitable, either electric, or pneumatic, or hydraulic actuating means.

Further improvements according to the invention form the subject of the dependant claims.

One preferred embodiment of the invention will be disclosed more in detail hereinafter, reference being had to the drawings, in which:
Figures 1 and 2 show in side elevation an apparatus for feeding bundles of laminations according to the invention, in two different operative positions.
Figures 3 and 4 are top views showing the apparatus for feeding bundles of laminations according to Figures 1 and 2, in the situation according to Figure 2, and in two different operative positions.

In the Figures, by numeral 1 there is designated the vertical feeding duct of a machine that processes or uses bundles of metallic sheets (bundles of laminations PL), and that may particularly be a machine for making stators or rotors for electric machines, or transformers, or the like. A section 2 of the machine frame extends above the opening of the feeding duct 1, along the rear side thereof.

By numeral 3 there is designated the magazine for the successive bundles of laminations PL to be separately introduced one after the other into the vertical feeding duct 1 of the machine. In the shown embodiment, the said magazine 3 consists of a stationary case open at the top and positioned horizontally so as to face the feeding duct 1. The case 3 can contain just a bundle of laminations PL of a predetermined length, and this case is so arranged that this bundle of laminations PL has its horizontal axis oriented orthogonally to the vertical longitudinal axis of the feeding duct 1.

Two fixed supporting arms 4 extend from and forwardly of the section 2 of the machine frame, on two sides of the feeding duct 1 and at a certain height above the opening thereof; a crosspiece 6 carrying a pneumatic or hydraulic actuating cylinder 7, is rotatably mounted between the ends of the said supporting arms 4 by means of a transversal horizontal shaft 5. The shaft 5 can be rotated over at least 90° by a link 8 and a pneumatic or hydraulic actuating cylinder 9. The crosspiece 6 and the actuating cylinder 7 are arranged between the two fixed supporting arms 4, while the link 8 and the respective actuating cylinder 9 are located on the outward side of one of the said supporting arms 4.

The actuating cylinder 7 is fixed to one side of the crosspiece 6, while its stem 107 is slidably fitted through the crosspiece 6 and carries a permanent magnet 10 which faces the opposite side of the said crosspiece 6, is parallel thereto, and is of a same length as the bundle of laminations PL. Of course, in lieu of only one permanent magnet 10, an equivalent group of two or more permanent magnets may be provided and fixed to the magnet holder 11 which is integral with the stem 107 of the pneumatic actuating cylinder 7. The magnet holder 11 and the permanent magnet or magnets 10 are also located between the two fixed supporting arms 4 and are slidably guided relative to the crosspiece 6, by guide rods 12 which are integral with the magnet holder 11 and are parallel to the stem 107 of the actuating cylinder 7, the said guide rods being each slidable in the respective bushing 13 on the crosspiece 6.

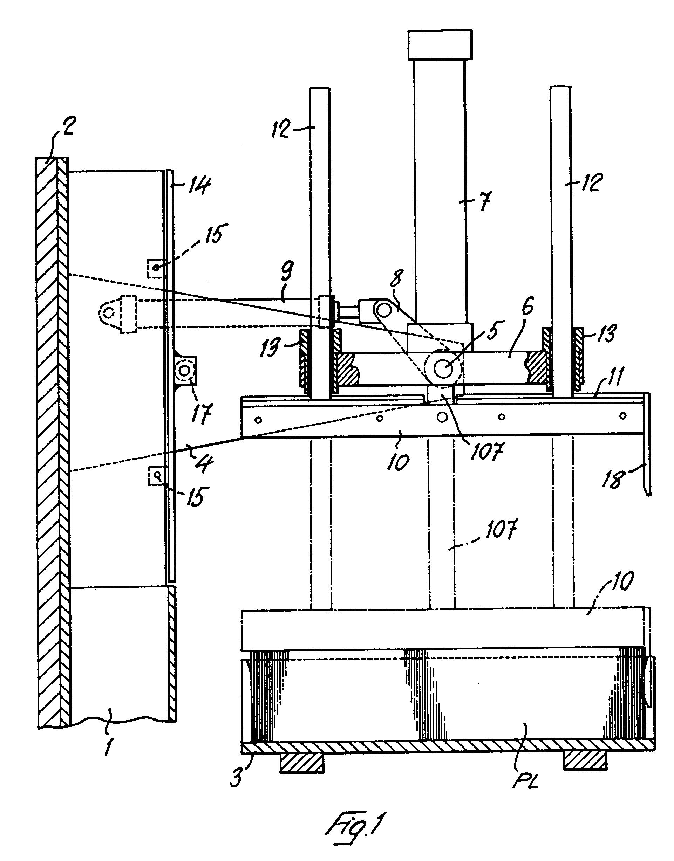

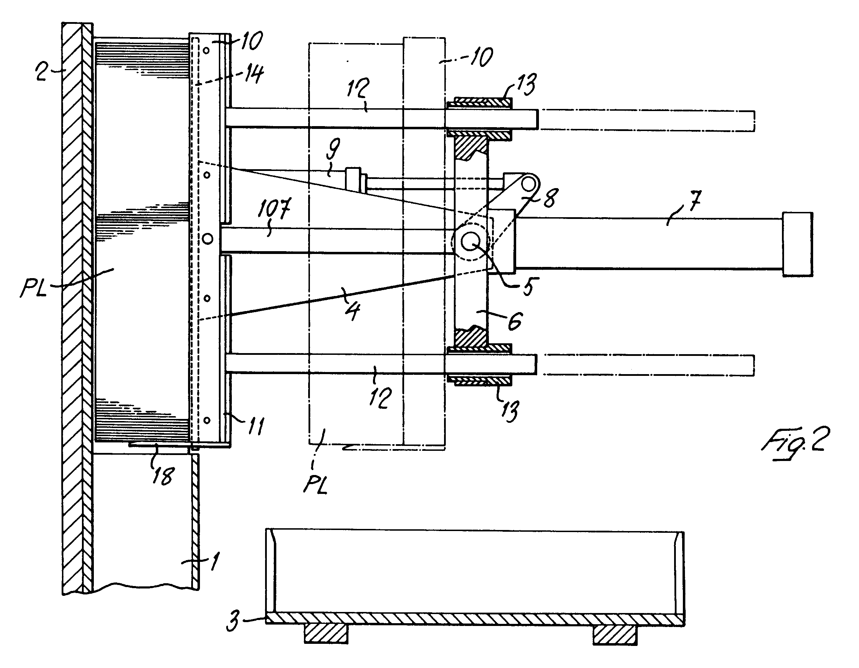

The assembly consisting of the crosspiece 6, the actuating cylinder 7, the magnet holder 11 and the permanent magnet or magnets 10, can be rotated by the actuating cylinder 9 and the link 8 so as to be caused to alternately assume two angular positions at 90° the one from the other. In one of these angular positions, the so-called withdrawal position shown in Figure 1, the actuating cylinder 7 is vertical, with its stem 107 directed downwardly toward the magazine case 3, while the crosspiece 6, the magnet holder 11, and the permanent magnet 10 which are fixed to the free bottom end of the stem 107 of the actuating cylinder 7, are horizontal and parallel to the magazine case 3 and to the bundle of laminations PL contained therewithin. In the other angular position, the so-called transfer position shown in Figures 2, 3, and 4, the crosspiece 6, the magnet holder 11, and the permanent magnet 10 are vertical, and are directed toward the feeding duct 1, while the actuating cylinder 7 is horizontal and is located on the side of the crosspiece 6 which is opposite to the feeding duct 1.

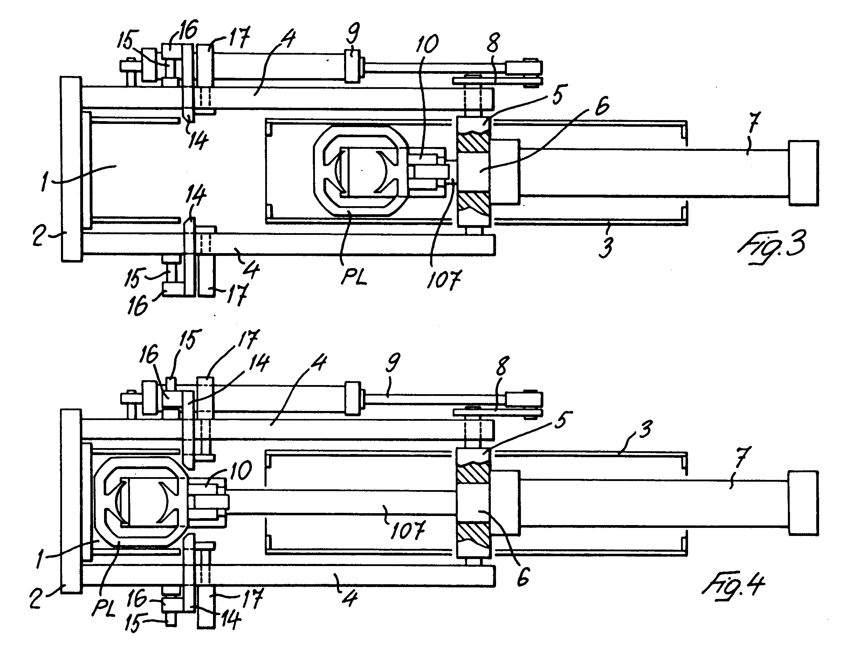

Two opposed abutment bars 14 are arranged on two sides of the machine feeding duct 1, in the region above the opening thereof, and extend vertically over the front edge (lying opposite to the fixed rear frame section 2) of the opening of the said feeding duct 1. These two abutment bars 14 are so guided as to be horizontally shiftable with the aid, for example, of bushings 16 which are slidable on pins 15 being integral with the two fixed supporting arms 4, and the said bars are thus drawn near to, and away from each other, so as to be caused to take alternately an inactive, laterally outward position, in which they allow a bundle of laminations PL to pass between them, as shown in Figure 3, and an active, laterally inward position in which the clearance between the two abutment bars 14 does not allow the passage of a bundle of laminations PL, as shown in Figure 4. The abutment bars 14 are shifted from the one to the other of the said two positions by respective, either pneumatic or hydraulic cylinders 17, and their vertical extent preferably corresponds to the length of a bundle of laminations PL.

The automatic operation of the feeding apparatus, to be controlled in any suitable manner and according to any suitable sensors, is as follows:
A bundle of laminations PL is placed, for example by hand, into the stationary magazine case 3, and the shaft 5 is so rotated that the assembly consisting of the crosspiece 6, the actuating cylinder 7, the magnet holder 11, and the permanent magnet or magnets 10, is caused to take its withdrawal angular position shown in Figure 1. The magnet holder 11 and the permanent magnet or magnets 10 are then lowered down by the actuating cylinder 7 until the magnet or magnets 10 come into contact with the bundle of laminations PL contained in the case 3, so that they magnetically grasp this bundle of laminations PL, as shown by dash-and-dot lines in Figure 1. Nextly, the magnet holder 11 and the permanent magnet or magnets 10 are lifted up together with the grasped bundle of laminations PL by the actuating cylinder 7, and then the shaft 5 is rotated over 90° by the actuating cylinder 9, in clockwise direction as in Figure 1, whereby the assembly consisting of the crosspiece 6, the actuating cylinder 7, the magnet holder 11, and the permanent magnet or magnets 10, is moved together with the bundle of laminations PL, into its transfer angular position shown in Figure 3, and by dash-and-dot lines in Figure 2. The abutment bars 14 have been already positioned, or will be in the meantime moved into their inactive position, away from each other, as shown in Figure 3. The magnet holder 11 and the permanent magnet or magnets 10 are now advanced horizontally together with the bundle of laminations PL, toward a feeding duct 1 by the actuating cylinder 7, so that the bundle of laminations PL is moved through the two wide apart abutment bars 14, and is placed over the opening of the feeding duct 1, co-axially thereto, as shown in Figures 2 and 4.

The abutment bars 14 are then moved into their close active position, that is, they are drawn near to each other, as shown in Figure 4, whereupon the crosspiece 6 and the magnet holder 11 with the permanent magnet or magnets 10 are horizontally retracted by the actuating cylinder 7. The bundle of laminations PL is however held back by the abutment bars 14 and it is then separated from the permanent magnet or magnets 10, so that it drops down into the underlying feeding duct 1. After the crosspiece 6 with the magnet holder 11 and the permanent magnet or magnets 10 having been retracted horizontally from the feeding duct 1, the shaft 5 is rotated back over 90° by the actuating cylinder 9, in anticlockwise direction as in Figure 2, whereby the assembly consisting of the crosspiece 6, the actuating cylinder 7, the magnet holder 11 and the permanent magnet or magnets 10, is again moved into the angular withdrawal position as in Figure 1, over a new bundle of laminations PL having been in the meantime accomodated in the magazine case 3. The above-disclosed operative cycle is then repeated, particularly upon a purposeful control from the machine, any time this machine demands to be fed with another bundle of laminations.

The magnet holder 11 may have at one end a tongue 18 which in the angular transfer position of the assembly consisting of the crosspiece 6, the actuating cylinder 7, the magnet holder 11 and the magnet or magnets 10, comes to be set under a bundle of laminations PL. This tongue 18 sustains the bundle of laminations PL that is held back by the abutment bars over the opening of the feeding duct 1, at the time the said assembly is being retracted and after the bundle of laminations PL has been separated from the magnet or magnets 10, until the said tongue is being slid away from the underside of the bundle of laminations PL, as it evidently appears from Figure 2.

In a further not shown embodiment, the single bundles of laminations PL can be mechanically and automatically brought into, and arranged the one after the other in the withdrawal station, that corresponds to the stationary case 3 as provided in the above-disclosed and shown embodiment. For this purpose, a succession of movable cases 3 containing each a bundle of laminations PL, and which are, for example chain-like, connected to each other, or may be advanced by pushing them, can be moved the one against the other into the said withdrawal position.

Instead of being laid down and positioned horizontally in the withdrawal station, just as in the above-disclosed and shown embodiment, the bundle of laminations PL may be oriented vertically in the said withdrawal station, and, for example, it may be arranged in a parallel, angularly offset position with respect to the position that the same is caused to take over the opening of the feeding duct 1, and which is shown in Figure 2. In this case, instead of being rotated in a vertical plane by 90° around a horizontal axis, the assembly consisting of the crosspiece 6, the magnet holder 11 and the permanent magnet or magnets 10, will be rotated for example over 90° or 180° around a vertical axis.

The permanent magnet or magnets 10 which grasp a bundle of laminations PL, may also consist of electromagnets. In this case, the abutment bars 14 for separating a bundle of laminations PL from the permanent magnet or magnets 10 may even be not provided, since the bundle of laminations PL is grasped in the withdrawal station and is released over the opening of the feeding duct 1 simply by switching on and switching off the electromagnet energizing current.

## Claims

1. An apparatus for feeding bundles of laminations (PL) to a machine that processes or uses bundles of laminations, particularly to a machine for making rotors or stators for electric machines, or transformers, or the like, said machine having a vertical feeding duct (1) into which the vertically oriented bundles of laminations (PL) are introduced the one after the other from above, and said apparatus comprising a movable grasping and transferring device (10, 11) which cyclically takes a bundle of laminations (PL) from a magazine (3) located in a withdrawal station, and conveys this bundle of laminations (PL) co-axially over the opening of the feeding duct (1) of the machine, so as to enable said bundle to be set into the said duct, characterized in that the grasping and transferring device comprises a permanent magnet (10) (or a group of two or more permanent magnets) for engagement with one longitudinal side of a bundle of laminations (PL) over the whole length thereof, and the withdrawal of a bundle of laminations (PL) from the respective magazine (3) in the withdrawal station is performed simply by contact, while for the release of the bundle of laminations (PL) over the opening of the feeding duct (1) of the machine one or more movable abutment members (14) are provided, which are shiftable between an inactive position in which they allow the bundle of laminations (PL) to be freely positioned over the opening of the said feeding duct (1), and an active position in which the said members engage and hold back the bundle of laminations (PL) having been positioned over the opening of the feeding duct of the machine, thus causing the separation of this bundle of laminations (Pl) from the permanent magnet or magnets (10) of the grasping and transferring device, on this device being retracted.

2. The apparatus according to claim 1, characterized in that the movable abutment members consist of two abutment bars (14) which are arranged on opposite sides of the inlet for a bundle of laminations (PL) being moved into its position over the opening of the feeding duct (1) of the machine, and which are so shiftable as to be drawn away from, and near to each other, whereby the said inlet will be entirely opened or partly closed.

3. The apparatus according to claim 1, characterized in that the grasping and transferring device (10, 11) is slidably mounted on to a supporting member (6) which is rotatable around an axis (5) that is perpendicular to the direction in which the said grasping and transferring device is caused to slide.

4. The apparatus according to claim 3, characterized in that the supporting member (6) can be rotated over at least 90° around a horizontal axis (5), in such a manner that the slidable grasping and transferring device (10, 11) and the direction of its sliding will be alternately turned toward an underlying or overlying magazine (3) containing the bundle of laminations (PL) to be taken therefrom, and toward a region above the opening of the feeding duct (1) of the machine.

5. The apparatus according to claim 3, characterized in that the supporting member (6) can be rotated around a vertical axis, in such a manner that the grasping and transferring device (10, 11) and the direction of its sliding will be alternately turned toward a region above the opening of the feeing duct (1) of the machine, and toward a magazine which is angularly offset in the horizontal direction, relative to the said region, and which contains the bundle of laminations (PL) to be taken therefrom.

6. The apparatus according to claim 1, characterized in that the magazine in the station for withdrawal of the bundles of laminations (PL) consists of a stationary case (3) or of any other housing being capable to accomodate one bundle of laminations (PL) at a time, and permitting the withdrawal of the bundle of laminations by the grasping and transferring device (10, 11).

7. The apparatus according to claim 1, characterized in that the magazine for the bundles of laminations (PL) consists of a succession of movable cases or of any equivalent suitable housings containing each a bundle of laminations, and which are moved the one after the other into the station for withdrawal of a bundle of laminations (PL) by the grasping and transferring device (10, 11).

8. The apparatus according to claim 1, characterized in that the cases or the equivalent housings intended for containing each a bundle of laminations, are mounted on any suitable conveyor, or consitute an integral part of any suitable conveyor, such as a chain, a rotary table, or the like.

## Patentansprüche

1. Vorrichtung zum Zuführen von Blechpaketen (PL) zu einer Maschine, die Blechpakete verarbeitet oder benutzt, insbesondere zu einer Maschine zur Herstellung von Rotoren oder Statoren für elektrische Maschinen, oder Transformatoren oder dergleichen, welche Maschine einen vertikalen Zuführschacht (1) aufweist, in den die vertikal ausgerichteten Blechpakete (PL) eines nach dem anderen von oben eingeführt werden, wobei die Vorrichtung eine bewegliche Greif- und Übergabeeinrichtung (10, 11) aufweist, die zyklisch ein Blechpaket (PL) aus einem in einer Entnahmestation befindlichen Magazin entnimmt und dieses Blechpaket (PL) koaxiel über die Öffnung des Zuführschachtes (1) der Maschine fördert, so daß dieses Paket in diesen Schacht eingeführt werden kann, dadurch gekennzeichnet, daß die Greif- und Übergabeeinrichtung einen Permanentmagneten (10) (oder eine Gruppe von zwei oder mehreren Permanentmagneten) umfaßt, der gegen eine Längsseite eines Blechpaketes (PL) über dessen gesamte Länge zu anbringbar ist, wobei die Entnahme eines Blechpaketes (PL) aus dem entsprechenden Magazin (3) in der Entnahmestation einfach durch Kontakt erfolgt, während für die Freigabe des Blechpaketes (PL) über der Öffnung des Zuführschachtes (1) der Maschine ein oder mehrere bewegliche Anschlagelemente (14) vorgesehen sind, die zwischen einer inaktiven Stellung, in der sie des freie Positionieren des Blechpaketes über der Öffnung dieses Zuführschachtes (1) ermöglichen, und einer aktiven Position verstellbar sind, in der diese Elemente gegen das über der Öffnung des Zuführschachtes der Maschine positionierte Blechpaket (PL) zur Anlage kommen und dieses zurückhalten, wodurch das Loslösen dieses Blechpaketes (PL) von dem Permanentmagnet oder den -magneten (10) der Greif- und Übergabeeinrichtung bewirkt wird, wenn diese Einrichtung zurückgezogen wird.

2. Vorrichtung nach Anspruch 1, dadurch gekennzeichnet, daß die beweglichen Anschlagelemente aus zwei Anschlagstangen (14) bestehen, die auf gegenüberliegenden Seiten des Einlasses für ein Blechpaket (PL) angeordnet sind, welches in seine Position über der Öffnung des Zuführschachtes (1) der Maschine bewegt wird, und die so verstellbar sind, daß sie voneinander weg oder dicht aufeinander zu bewegbar sind, wodurch dieser Einlaß vollständig geöffnet oder teilweise verschließbar ist.

3. Vorrichtung nach Anspruch 1, dadurch gekennzeichnet, daß die Greif- und Übergabeeinrichtung (10, 11) verschiebbar auf einem Stützgerüst (6) gelagert ist, das um eine Achse (5) drehbar ist, die senkrecht zu der Richtung liegt, in der diese Greif- und Übergabeeinrichtung verschoben wird.

4. Vorrichtung nach Anspruch 3, dadurch gekennzeichnet, daß das Stützgerüst (6) über mindestens 90° um eine Horizontalachse (5) in einer solchen Weise drehbar ist, daß die verschiebbare Greif- und Übergabeeinrichtung (10, 11) und ihre Verschieberichtung abwechselnd zu einem unteren oder einem oberen Magazin (3), die das zu entnehmende Blechpaket (PL) enthalten, und zu einem Bereich über der Öffnung des Zuführschachtes (1) der Maschine drehbar sind.

5. Vorrichtung nach Anspruch 3, dadurch gekennzeichnet, daß das Stützgerüst (6) in einer solchen Weise um eine Vertikalachse drehbar ist, daß die Greif- und Übergabeeinrichtung (10, 11) und ihre Verschieberichtung abwechselnd zu einem Bereich über der Öffnung des Zuführschachtes (1) der Maschine und zu einem Magazin gedreht werden können, das winkelbezogen in der Horizontalrichtung relativ zu diesem Bereich versetzt ist, und welches das zu entnehmende Blechpaket (PL) enthält.

6. Vorrichtung nach Anspruch 1, dadurch gekennzeichnet, daß das Magazin in der Entnahmestation der Blechpakete (PL) aus einem stationären Behältnis (3) oder aus irgend einem anderen Gehäuse besteht, das in der Lage ist, jeweils ein Blechpaket (PL) aufzunehmen, und das die Entnahme des Blechpaketes durch die Greif- und Übergabeeinrichtung (10, 11) ermöglicht.

7. Vorrichtung nach Anspruch 1, dadurch gekennzeichnet, daß das Magazin für die Blechpakete (PL) aus einer Serie von beweglichen Behältnissen oder aus beliebigen anderen geeigneten Gehäusen, die jedes ein Blechpaket aufnehmen, besteht, und die eines nach den anderen in die Entnahmestation für ein Blechpaket (PL) durch die Greif- und Übergabeeinrichtung (10, 11) bewegbar sind.

8. Vorrichtung nach Anspruch 1, dadurch gekennzeichnet, daß die Behältnisse oder äquivalenten Gehäuse, die jeweils für die Aufnahme eines Blechpaketes vorgesehen sind, auf einem geeigneten Förderer angebracht sind oder einen integrierenden Bestandteil jedes geeigneten Förderers, wie einer Kette, eines Drehtisches oder dergleichen, bilden.

## Revendications

1. Appareil pour alimenter en paquets de tôles (PL) une machine qui traite ou qui utilise des paquets de tôles, et en particulier une machine destinée à fabriquer des rotors ou des stators de machines électriques ou des transformateurs ou similaires, ladite machine comprenant un canal d'alimentation vertical (1) dans lequel les paquets de tôles (PL) orientés verticalement sont introduits les uns après les autres depuis le haut, et ledit appareil comprenant un dispositif mobile de préhension et de transfert (10, 11) qui saisit d'une manière cyclique un paquet de tôles (PL) dans un magasin (3) situé dans un poste d'extraction et qui transporte ce paquet de tôles (PL) jusqu'à l'amener coaxialement au-dessus de l'ouverture du canal d'alimentation (1) de la machine, de façon à pouvoir déposer ledit paquet dans ledit canal, caractérisé par le fait que le dispositif de préhension et de transfert comprend un aimant permanent (10) (ou un groupe de deux aimants permanents ou plus) destiné à venir en contact avec un côté longitudinal d'un paquet de tôles (PL) sur toute la longueur de celui-ci, et que l'extraction d'un paquet de tôles (PL) du magasin correspondant (3) dans le poste d'extraction a lieu par simple contact, tandis que, pour relâcher le paquet de tôles (PL) au-dessus de l'ouverture du canal d'alimentation (1) de la machine, il est prévu un ou plusieurs organes de butée mobiles (14) qui peuvent être déplacés entre une position inactive dans laquelle ils permettent de positionner librement le paquet de tôles (PL) au-dessus de l'ouverture dudit canal d'alimentation (1) et une position active dans laquelle lesdits organes viennent en contact pour le retenir avec le paquet de tôles (PL) qui a été positionné au-dessus de l'ouverture du canal d'alimentation de la machine, en causant ainsi la séparation de ce paquet de tôles (PL) du ou des aimants permanents (10) du dispositif de préhension et de transfert pendant que ce dispositif est rétracté.

2. Appareil selon la revendication 1, caractérisé par le fait que les organes de butée mobile sont constitués par deux barres de butée (14) qui sont disposées sur des côtés opposés de l'entrée destinée à un paquet de tôles (PL) qui se déplace jusqu'à venir en position au-dessus de l'ouverture du canal d'alimentation (1) de la machine, et qui peuvent être déplacées de façon à s'écarter et à se rapprocher l'une de l'autre, ladite entrée étant entièrement ouverte ou partiellement fermée.

3. Appareil selon la revendication 1, caractérisé par le fait que le dispositif de préhension et de transfert (10, 11) est monté en pouvant glisser sur un organe formant support (6) qui peut tourner autour d'un axe (5), lequel est perpendiculaire à la direction selon laquelle ledit dispositif de préhension et de transfert est amené à glisser.

4. Appareil selon la revendication 3, caractérisé par le fait que l'on peut faire tourner l'organe formant support (6) d'au moins 90° autour d'un axe horizontal (5), d'une manière telle que le dispositif glissant de préhension et de transfert (10, 11) et sa direction de glissement soient alternativement tournés vers un magasin (3) qui est disposé au-dessous ou au-dessus et qui contient le paquet de tôles (PL) qu'il s'agit d'en extraire, et vers une région située au-dessus de l'ouverture du canal d'alimentation (1) de la machine.

5. Appareil selon la revendication 3, caractérisé par le fait que l'on peut faire tourner l'organe formant support (6) autour d'un axe vertical d'une manière telle que le dispositif de préhension et de transfert (10, 11) et sa direction de glissement soient alternativement tournés vers une région située au-dessus de l'ouverture du canal d'alimentation (1) de la machine, et vers un magasin qui est décalé angulairement dans la direction horizontale par rapport à ladite région et qui contient le paquet de tôles (PL) qu'il s'agit d'en extraire.

6. Appareil selon la revendication 1, caractérisé par le fait que le magasin contenu dans le poste d'extraction des paquets de tôles (PL) est constitué par un caisson fixe (3) ou par tout autre logement qui est susceptible de recevoir un paquet de tôles (PL) à la fois et qui permet d'extraire le paquet de tôles au moyen du dispositif de préhension et de transfert (10, 11).

7. Appareil selon la revendication 1, caractérisé par le fait que le magasin destiné aux paquets de tôles (PL) est constitué par une succession de caissons mobiles ou de tous autres logements équivalents appropriés qui contiennent chacun un paquet de tôles et qui sont déplacés l'un après l'autre jusque dans le poste d'extraction d'un paquet de tôles (PL) par le dispositif de préhension et de transfert (10, 11).

8. Appareil selon la revendication 1, caractérisé par le fait que les caissons ou les logements équivalents qui sont destinés à contenir chacun un paquet de tôles sont montés sur un transporteur approprié quelconque, ou qu'ils forment une partie intégrante d'un transporteur quelconque approprié comme une chaîne, une table tournante ou similaire.
